# DEMANDE DE BREVET EUROPEEN

(11) **EP 1 134 017 A1**
(43) Date de publication de la demande: **19.09.2001**
(21) Numéro de dépôt: 01400443.6
(22) Date de dépôt: 20.02.2001
(51) Int. Cl.: B01D 53/86, F27B 15/00, B01D 53/90

(54) **Procédé pour reduire les emissions d'oxydes nitreux N20 dans une installation de combustion comprenant un foyer fonctionnant en lit fluidise circulant, et installation pour la mise en oeuvre du procédé**

(30) Priorité: 14.03.2000 FR 0003232
(71) Demandeur: ALSTOM Power N.V., 1101 CS Amsterdam (NL)
(72) Inventeur: Vandycke, Michel, 78950 Gambais (FR); Beal, Corinne, 78960 Voisins le Bretonneux (FR); Hamon, Christian, 44600 Saint-Nazaire (FR)
(74) Mandataire: Gosse, Michel

(57) **Abrégé**

Le procédé est caractérisé en ce qu'un catalyseur appartenant à la famille des zéolithes est injecté dans le foyer (1) du lit fluidisé circulant sous forme pulvérulente.

L'installation comprend un foyer (1) dont la partie haute est raccordée à un séparateur (3) et dont la partie basse est raccordée au foyer (1) par une boucle de recirculation (4), un silo (5), dans lequel est stocké le catalyseur à base de zéolithes broyées, est relié par un transporteur (6) à la boucle de recirculation (4).

## Description

L'invention porte sur un procédé pour réduire les émissions d'oxydes nitreux (N₂O) dans une installation de combustion comprenant un foyer fonctionnant en lit fluidisé brûlant des combustibles, quel que soit leur état, par exemple du charbon.

La combustion en lit fluidisé est une technique en développement pour la production d'énergie. Dans les installations de combustion fonctionnant en lit fluidisé circulant, on sait désulfurer les fumées de combustion par injection de calcaire dans le foyer. On sait également limiter les émissions d'oxydes d'azote (NO, NO₂) par un contrôle de la température et par un étagement dans le foyer des injections d'air secondaire mais en contrepartie on augmente les émissions d'oxydes nitreux (N₂O). Or, on sait que ce dernier gaz contribue au développement de l'effet de serre et à la destruction de la couche d'ozone.

On sait réduire les émissions d'oxydes nitreux en effectuant une combustion supplémentaire dans les fumées de combustion en sortie d'un séparateur de type cyclone par exemple, à l'aide d'un combustible additionnel qui peut être du gaz naturel ou du charbon micronisé. Une injection d'air complémentaire peut encore être prévue en amont d'une chaudière de récupération de l'énergie des fumées de combustion.

On connaît par le document DE 19728699A1 un procédé pour la réduction catalytique d'oxydes d'azote NOₓ contenus dans les fumées, procédé dans lequel, après le foyer de combustion, dans un conduit de fumées, on ajoute de l'ammoniac et un catalyseur du type zéolithe naturel. Avec un tel procédé, le contact entre les fumées et le catalyseur est de courte durée et exige ainsi un grand volume de zéolithe.

La présente invention propose un procédé améliorant la durée de contact entre le catalyseur et les gaz de combustion permettant ainsi une diminution du volume nécessaire de catalyseur.

L'invention a ainsi pour objet un procédé pour réduire les émissions d'oxydes nitreux N₂O dans une installation de combustion comprenant un foyer fonctionnant en lit fluidisé circulant, caractérisé en ce qu'un catalyseur appartenant à la famille des zéolithes est injecté dans le foyer du lit fluidisé circulant, sous forme pulvérulente.

Les zéolithes sont des silicoaluminates cristallisés tétraédriques. L'arrangement dans les trois directions de l'espace de ces tétraèdres (SiO₂ et AlO₄) avec mise en commun des oxygènes génère une miicroporosité faite de canaux et cavités ayant des tailles de l'ordre de 3 à 13 Å selon le type de zéolithe. On peut incorporer dans les zéolithes différents cations métalliques par échange cationique et leur conférer ainsi des propriétés particulières. On choisira de préférence le fer (Fe²⁺) qui n'induit pas de contraintes particulières pour la mise en décharge ou la valorisation des cendres si le catalyseur est chargé dans le foyer.

Le catalyseur est broyé à une granulométrie ajustée pour qu'il séjourne suffisamment longtemps dans la boucle de recirculation des particules solides traversant le cyclone. Des essais ont permis d'obtenir une réduction d'environ 85% des émissions d'oxydes nitreux en injectant une quantité de catalyseur pulvérulent à base de zéolithes représentant entre 0,2 et 5% de la charge en solides circulants dans le foyer. Par ailleurs, avec un catalyseur de diamètre moyen compris entre 0,05 et 2 mm, le temps de séjour dans la boucle de recirculation est d'environ 50 heures. Une telle granulométrie permet en outre d'extraire le catalyseur en bas de foyer avec les cendres de lit et le catalyseur ainsi récupéré peut être recyclé dans le foyer après avoir été séparé des cendres de lit.

Ainsi, avec le procédé selon l'invention où le catalyseur est introduit, non pas en aval du foyer dans un conduit de fumées, mais dans le foyer, on obtient une durée de mise en contact du catalyseur avec les gaz de combustion beaucoup plus importante que dans le cas de l'art antérieur cité ci-dessus.

On peut utiliser des zéolithes synthétiques ou naturelles comme une mordénite provenant de Hongrie dont le rapport Si/Al (atomique) est compris entre 5 et 6.

On a également observé que la mise en oeuvre du procédé selon l'invention contribuait à convertir dans les fumées de combustion le monoxyde de carbone (CO) en dioxyde de carbone (CO₂).

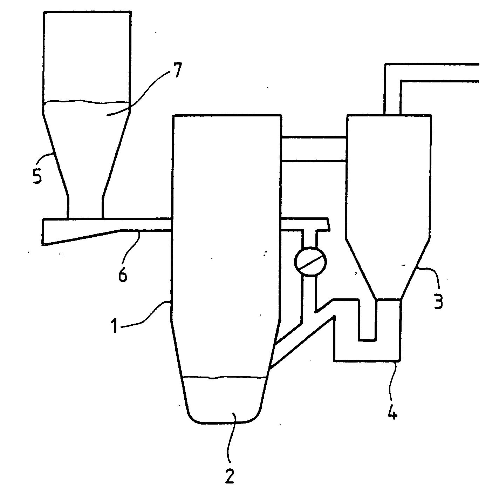

La mise en oeuvre du procédé selon l'invention est illustrée très schématiquement sur la figure unique.

Sur cette figure, une installation de combustion d'un combustible liquide ou solide comme du charbon comprend un foyer 1 fonctionnant en lit fluidisé circulant par exemple. Le haut du foyer est raccordé à un séparateur de particules du type cyclone ou analogue 3. Ce séparateur reçoit les fumées de combustion en sortie du foyer et comporte une partie haute qui rejette les fumées de combustion avec les cendres volantes et une partie basse qui récupère les particules solides les plus grossières 2 présentes dans les fumées de combustion. La partie basse du séparateur 3 est raccordée au bas du foyer 1 par l'intermédiaire d'une boucle de recirculation 4 munie d'un siphon. Le catalyseur pulvérulent à base de zéolithes broyées est stocké dans un silo 5 qui est relié par l'intermédiaire d'un système de transport 6 à la boucle de recirculation 4 ce qui permet d'injecter le catalyseur pulvérulent indiqué par 7 dans le foyer 1 pour réduire les émissions en oxydes nitreux (N₂O) dans l'installation de combustion.

L'installation de combustion en lit fluidisé circulant fonctionne de façon préférentielle à une température comprise entre 750°C et 950°C.

## Revendications

1. Procédé pour réduire les émissions d'oxydes nitreux N₂O dans une installation de combustion comprenant un foyer (1) fonctionnant en lit fluidisé circulant, **caractérisé en ce qu'**un catalyseur appartenant à la famille des zéolithes est injecté dans le foyer (1) du lit fluidisé circulant, sous forme pulvérulente.

2. Procédé selon la revendication 1, dans lequel le catalyseur injecté dans le foyer représente entre 0,2 et 5 % de la charge de solides circulant dans le foyer.

3. Procédé selon l'une des revendications 1 ou 2, dans lequel le catalyseur a un diamètre moyen compris entre 0,05 et 2 mm.

4. Procédé selon l'une des revendications 1 à 3, **caractérisé en ce que** ledit catalyseur est injecté dans le foyer (1) par l'intermédiaire d'une boucle de recirculation (4) reliant la partie basse d'un séparateur (3) au bas du foyer (1).

5. Installation pour la mise en oeuvre du procédé selon l'une des revendications 1 à 4, comprenant un foyer (1) fonctionnant en lit fluidisé circulant, le haut du foyer étant raccordé à un séparateur de particules (3) dont la partie basse, récupérant les particules solides les plus grossières (2) présentes dans les fumées de combustion, est raccordée au bas du foyer (1) par l'intermédiaire d'une boucle de recirculation (4) munie d'un siphon, **caractérisé en ce qu'**un silo (5), dans lequel est stocké un catalyseur à base de zéolithes broyées, est relié par l'intermédiaire d'un système de transport (6) à la boucle de recirculation (4).
